# EUROPÄISCHE PATENTSCHRIFT

(11) **EP 3 300 822 B1**
(45) Veröffentlichungstag und Bekanntmachung des Hinweises auf die Patenterteilung: **20.11.2024**
(21) Anmeldenummer: 17195584.2
(22) Anmeldetag: 05.04.2007
(51) Int. Cl.: B23B 31/107, B23B 31/117, B23B 31/20, B24B 45/00

(54) **AUSZUGSSICHERUNG VON WERKZEUGEN AUS WERKZEUGHALTERN MIT EINER WERKZEUGAUFNAHME**
MEANS FOR PREVENTING TOOLS FROM BEING PULLED OUT FROM TOOL HOLDERS WITH A TOOL HOLDING FIXTURE
SÉCURITÉ ANTI-EXTRACTION D'OUTILS DE PORTE-OUTILS MUNIS D'UN ATTACHEMENT D'OUTIL

(30) Priorität: 10.04.2006 DE 102006016784; 19.06.2006 DE 102006028408
(43) Veröffentlichungstag der Anmeldung: 04.04.2018
(62) Teilanmeldung aus: 11158389.4
(73) Patentinhaber: Franz Haimer Maschinenbau KG, 86568 Hollenbach-Igenhausen (DE)
(72) Erfinder: Haimer, Franz, 86568 Igenhausen (DE)
(74) Vertreter: Schwarz, Wolfgang

(56) Entgegenhaltungen:
- WO-A1-01/14089
- DE-A1- 4 041 208
- DE-T2- 69 205 367

## Beschreibung

Die vorliegende Erfindung betrifft Werkzeughalter mit einer Werkzeugaufnahme, insbesondere Schrumpffuttern und anderen Futtern zur Aufnahme von Rotationswerkzeugen gemäß dem Oberbegriff des Anspruchs 1.

Werkzeughalter mit Spannfuttern, insbesondere Schrumpffuttern sind vielfältig bekannt. Sie dienen dem Einspannen von Rohr-, Dreh-, Fräs-, Reib- und Schleifwerkzeugen o. dgl. über einen thermisch bedingten Schrumpfvorgang. Üblicherweise werden solche Schrumpffutter durch eine induktive Schrumpfanlage thermisch erhitzt, wodurch sich der Innendurchmesser des Schrumpffutters vergrößert. Bei vergrößertem Innendurchmesser wird ein einzuspannendes Werkzeug in das Schrumpffutter eingesetzt, wobei das Verhältnis des Innendurchmessers des Schrumpffutters zum Schaftdurchmesser des Werkzeugs derart ausgelegt ist, dass beim anschließenden Abkühlen des Schrumpffutters das Werkzeug mit dem Schrumpffutter drehmomentfest verspannt ist.

Aus der WO 01/89758 A1 ist es bekannt, den Hülsenabschnitt mittels einer dem Hülsenabschnitt im Wesentlichen gleichachsig umschließenden, ringförmigen Spulenanordnung auf induktivem Wege zu erwärmen. Die Spulenanordnung ist an einen Hochfrequenz-Wechselstromgenerator angeschlossen und induziert in dem metallischen Hülsenabschnitt Wirbelströme, die den Hülsenabschnitt erwärmen. An den Stirnseiten und am Außenumfang der Spulenanordnung sind zur Vermeidung von Streuflüssen und zur Konzentration des Magnetflusses Magnetfluss-Konzentratorelemente aus weichmagnetischem, elektrisch im Wesentlichen nichtleitendem Material, wie z. B. Ferrit o. dgl. angeordnet, die den von der Spulenan. ordnung erzeugten Magnetfluss auf den Hülsenabschnitt des Werkzeughalters und insbesondere in den Bereich des freien Endes des Hülsenabschnittes lenken.

Das Problem bei Werkzeughaltern mit Spannfuttern für Rotationswerkzeuge, die einen zylindrischen Aufnahmeschaft aufweisen, ist das axiale Auswandern des Rotationswerkzeugs längs der Drehachse des Spannfutters während des Betriebs. Diese axiale Auswanderung des Rotationswerkzeugs ist bedingt durch Schwingungen, die während der Bearbeitung des Werkstücks mit dem Rotationswerkzeug auftreten. Aufgrund dieses nachteiligen Effekts können die Werkstücke nicht mehr präzise und Maßhaltig bearbeitet werden. Ferner könnte ein Verkanten des Rotationswerkzeugs im Werkstück oder sogar in dem Werkstück aufnehmenden Spannfutter zu gefährlichen Unfällen führen. Unter ungünstigen Bedingungen könnte sogar im Grenzfall das Rotationswerkzeug das Spannfutter des Werkzeughalters im Betrieb verlassen und so zu einer großen Gefahr für den Maschinenbediener werden.

DE 40 41 208 A1, welche die Basis für den Oberbegriff des Anspruchs 1 bildet, offenbart einen Schnellwechselhalter für Gewindebohrer, der in einem Gehäuse eine federbelastete Kugelhülse enthält, die eine zentrale Aufnahmeöffnung für den Schaft eines Werkzeugs in Form eines Vielkants und in ihrer Wandung in radialen Sitzen Spannkugeln enthält, die mit einer kegeligen, sich in Einsteckrichtung des Werkzeugs erweiternden Ringfläche des Gehäuses im Eingriff stehen und den Werkzeugschaft klemmend halten und gegen axiales Herausziehen sichern. Darüber hinaus sind zusätzliche, formschlüssig wirkende Sperrglieder enthalten, die eine weitere Axialsicherung für den Werkzeugschaft bedeuten.

Aufgabe der vorliegenden Erfindung ist es deshalb einen Werkzeughalter mit Spannfutter, insbesondere Schrumpffutter oder dgl. zur Verfügung zu stellen, bei welchem ein axiales auswandern des Rotationswerkzeugs, wie Rundbohrer, Profilbohrer, Schraubbohrer inkl. Gewindebohrer, Plansenker, Fräser usw., während des Betriebs nicht möglich ist, sondern das Rotationswerkzeug sowohl drehmomentfest als auch axial bezüglich der Drehachse festgehalten wird ohne auszuwandern.

Diese Aufgabe wird erfindungsgemäß durch die Merkmale des Anspruchs 1 gelöst, wobei zweckmäßigerweise Weiterbildungen der Erfindung durch die Merkmale in den Unteransprüchen geschaffen werden.

Nach Maßgabe der Erfindung weist ein erfindungsgemäßer Werkzeughalter eine Auszugssicherung des Werkzeugs auf, welches ein axiales Auswandern des Werkzeugs aus der Werkzeugaufnahme verhindert. Dabei umfasst die Auszugssicherungseinrichtung mindestens ein Sperrelement und mindestens eine dazu korrespondierende und das Sperrelement aufnehmende Sperrnut, welche formschlüssig zusammenwirken. Dabei sind das Sperrelement und die Sperrnut zumindest teilkugelkopfartig ausgebildet.

Im Übrigen können dabei die Sperrnute, welche sich stirnseitig beginnend am Werkzeughalter befinden, erweitert bzgl. der Nutbreite ausgeführt sein, um so ein leichteres Einsetzen des Werkzeugs im Werkzeughalter zu ermöglichen.

Zum Einspannen eines Rotationswerkzeugs wie Rundbohrer, Profilbohrer, Schraubbohrer inkl. Gewindebohrer, Plansenker, Fräser, Aufnahmedorne für weitere Werkzeuge usw., in ein Spannfutter, bspw. Schrumpffutter des Werkzeughalters, wird beim Schrumpffutter zunächst die Induktionsspule eingeschaltet, d. h. die Induktionsspule wird unter Hochfrequenz-Wechselstrom gesetzt. Aufgrund der auftretenden Wirbelströme im Hülsenabschnitt des Werkzeughalters, erzeugt durch Induktion aus der dem Werkzeughalter umgebenden Spule, wird der Hülsenabschnitt rasch erwärmt, so dass dieser sich thermisch ausdehnt und so der Innendurchmesser der Aufnahmeöffnung vergrößert wird. Das Rotationswerkzeug kann nun schaftseitig in die Aufnahmeöffnung eingeführt werden. Die Stirnseite des Rotationswerkzeugs gelangt dabei an die in den Innenraum der Aufnahmeöffnung hineinragenden Kugeln und schlägt dort an. Je nach Steigungsrichtung der Sperrnute des Rotationswerkzeugs wird nun dieses linksrum oder rechtsrum bezüglich der Drehachse gedreht, so dass die Kugeln in die kugelförmigen Nuten eingreifen können. Das weitere Drehen erzwingt nun ein schraubenförmiges Eindrehen und damit eine axiale Einzugsbewegung des Rotationswerkzeugs in das Schrumpffutter oder dgl., bis die Stirnseite des zylindrischen Schafts im Spannfutter anschlägt bzw. bis die Kugeln in den kugelförmigen Sperrnuten ihre Endlage erreicht haben. Die Induktionsspule kann nun ausgeschaltet werden. Aufgrund der nun einsetzenden raschen Abkühlung schrumpft das Schrumpffutter wieder auf seine ursprüngliche Größe zurück, wodurch der zylindrische Schaft drehmomentfest mit seiner Umfangsfläche mit der Innenumfangsfläche der Aufnahmeöffnung des Schrumpffutters mit Presssitz verbunden wird. Da die Drehrichtung der Sperrnuten der Drehrichtung der Rotationswerkzeuge entsprechen, kann beim Betrieb des Werkzeugs auch unter starker Belastung, d. h. bei hoher Schnittfestigkeit des Werkstücks und großem Vorschub des Werkzeugs bzw. des Werkzeugtisches, ein axiales Auswandern des Rotationswerkzeugs entlang der Drehachse nicht mehr auftreten. Durch das Zusammenwirken der Kugeln im Werkzeughalter mit den kugelprofilförmigen Sperrnuten im Werkzeugschaft und der gewindeartigen Ausführung dieser Sperrnuten, wird eine axiale Verriegelung erzeugt. Diese axiale Verriegelung kann nur dadurch aufgehoben werden, indem das Rotationswerkzeug in entgegen gesetzter Richtung zur Arbeitsdrehrichtung des Rotationswerkzeug gedreht wird und dabei gleichzeitig aus dem Spannfutter hinausgezogen wird. Eine entgegen der Arbeitsrichtung des Rotationswerkzeugs durchgeführte Drehung ist im Betrieb, also bei der Bearbeitung eines Werkstücks durch das Rotationswerkzeug aber nicht möglich. Ferner ist diese Drehbewegung aufgrund des drehmomentfesten Presssitzes während des Betriebs auch nicht möglich. Somit kann sich das Rotationswerkzeug auch nicht axial aus dem Schrumpffutter oder dgl. hinausbewegen.

Dadurch bleibt die Bearbeitung präzise und die Maßhaltigkeit kann innerhalb der geforderten Toleranzen beibehalten werden. Da ein axiales Auswandern durch die vorliegende Erfindung vermieden wird, kann somit effizient und kostensparend produziert werden, da sehr wenig Ausschuss im Vergleich zu herkömmlichen Werkzeughaltern mit Spannfuttern produziert wird. Auch ist damit eine weitere Unfallquelle und somit die Unfallgefahr für den Maschinenbediener ausgeschlossen.

An Stelle der im Spannfutter drehbar pressgelagerten Kugeln können auch Zylinderstifte mit einer Teil- bzw. Halbkugel an einer der Stirnseiten verwendet werden. Diese liegen anstelle der Kugeln in der Lagerbohrung, wobei diese beispielsweise entweder einen hinauskragenden Vorsprung benötigen, damit der Zylinderstift nicht in den Innenraum der Aufnahmeöffnung hineinfällt, oder ein Außengewinde, das korrespondierend zum Innengwinde der Lagerbohrung ist. Die Verwendung von Kugeln hat gegenüber der Verwendung von Zylinderstiften mit Teil- bzw. Halbkugelkopf den Vorteil, dass das Einführen des Rotationswerkzeugs im Vergleich zu Zylinderstiften leichter ist, da die Kugeln drehbar gelagert sind und im Vergleich zu dem Zylinderschaft nicht verkannten können. Auch können Kugeln in der jeweiligen Lagerbohrung unter Verwendung eines Gewindestiftes gehalten werden. Dabei weist der Zylinderstift selbst an seiner Stirnseite eine die Kugel aufnehmende Ausbildung auf, bspw. in Form einer polygonalen Ausnehmung oder einer kugelförmigen Einbauchung o. dgl.. Anstelle des Gewindestifts können auch Passstifte, Bolzen o. dgl. verwendet werden.

Die erfindungsgemäße Auszugssicherung von Werkzeugen, insbesondere Rotationswerkzeuge in Werkzeughaltern mit einer Werkzeugaufnahme, ist insbesondere geeignet für Spannfutter, wie Spannzangenfutter, HG-Futter, Hydrodehnspannfutter und Schrumpffutter.

Zum Beispiel sind je nach Anforderung die Sperrnute in den Umfangsflächen des Schafts des Werkzeugs unterschiedlich ausgebildet. Dabei können die Sperrnute von der Stirnseite aus beginnend einen unterschiedlichen Sperrnutverlauf aufweisen. Dieser kann schraubenförmig, L-förmig, kurvenförmig oder aus zusammengesetzten abschnittsweise gradlinigen und/oder kurvenförmigen Zylinderflächenbahnen gebildet sein. Insbesondere bei einem schraubenförmigen Sperrnutverlauf muss der Drehsinn dem Drehsinn des genuteten Werkzeugs entsprechen. D. h. bei links genutetem Werkzeug muss die schraubenförmige Sperrnut links steigend, bei rechts genutetem Werkzeug hingegen rechtssteigend gebildet sein. Daher erfolgt auch eine Sperrwirkung der Auszugssicherung.

In einem Beispiel weist der Schaft des Werkzeugs endseitig ein Außengewinde auf und die Werkzeugaufnahme des Werkzeughalters ein dazu korrespondierendes Innengewinde. In diesem Fall erfolgt die Auszugssicherung unter Verwendung des Außengewindes am Werkzeug, welches linkssteigend bei linksgenutetem Werkzeug und rechtssteigend bei rechts genutetem Werkzeug ausgebildet ist. In dieser Ausführungsform werden Sperrelemente und Sperrnute obsolet.

In einem weiteren Beispiel sind die Lagerbohrungen, welche die Sperrelemente aufnehmen, vorzugsweise durchgängig von der Außenumfangsfläche des Werkzeughalters bis in den in das Werkzeug aufnehmenden Innenraum des Werkzeughalters ausgebildet. Dabei können diese Lagerbohrungen senkrecht zur Rotationsachse des Werkzeughalters und die Rotationsachse schneidend gebildet sein und/oder tangential angrenzend an die innere Umfangsfläche des Werkzeug aufnehmenden Innenraums gebildet sein. Vorzugsweise sind die Längsachsen der Lagerbohrungen zueinander gleichwinkelig und insbesondere in einer Ebene senkrecht zur Drehachse des Werkzeugs angeordnet.

In einem weiteren Beispiel, insbesondere für Werkzeughalter mit Schrumpffutter, sind die Kugeln als Sperrelemente in einem Kugelkäfig gelagert. Dabei weisen die Lagerbohrungen für die jeweiligen Kugeln im Kugelkäfig bezüglich der Innenumfangsfläche jeweils einen kleineren Bohrungsdurchmesser auf, als der Lagerbohrungsdurchmesser. Dadurch können die Kugeln nicht nach innen in den Innenraum des Werkzeughalters fallen, sondern überkragen lediglich den Innenbereich des Kugelkäfigs. Der Kugelkäfig kann dabei entweder als separates Bauteil formschlüssig in den Innenraum des Werkzeughalters eingefügt sein, oder in einer Hülse eingearbeitet sein. Dabei weist die Hülse die jeweiligen Lagerbohrungen mit den bzgl. zum Innenraum liegenden kleineren Lagerbohrungsdurchmessern auf. Die Hülse kann dabei in den Innenraum der Werkzeugaufnahme eingepresst , eingeschrumpft, mit dem Werkzeughalter verschweißt, mit zusätzlichen Gewindestiften formschlüssig gehalten und/oder mit Sperrelementen und Sperrnuten an der Hülse, wie sie an dem Schaft von Rotationswerkzeugen beschrieben wurden, fixiert werden.

Erfindungsgemäß, insbesondere für Schrumpffutter, weist die Auszugssicherung zusätzlich eine Einrichtung auf, welche ein spielfreies Halten des Werkzeugs mit der Auszugssicherung ermöglicht. Dabei wird durch ein Kraft ausübendes Element, welches bspw. konzentrisch zur Rotationsachse des Werkzeugs am Bohrungsgrund der Werkzeugaufnahme angeordnet ist, das Werkzeug in der Werkzeugaufnahme in Richtung aus dem Werkzeughalter gedrückt. Dadurch liegt die Auszugssicherung spielfrei am Werkzeug. Denn auch ein geringes Spiel zwischen der Auszugssicherung und dem Werkzeug, erlaubt dem Werkzeug eine gewisse Bewegungsfreiheit, die bereits zu Beschädigungen der Werkzeugschneiden führen kann. Insbesondere sind als Kraft ausübendes Element Druckfedern in Form von Spiralfedern, Kegelfedern, Tellerfedern sowie Tellerfederpakete und/oder elastische bzw. gummielastische Elemente möglich.

In einem weiteren Beispiel für einen Werkzeughalter mit einer Minimalmengenschmierung, weist dieser wenigstens ein Übergabestück für die Minimalmengenschmierung auf, dass zumindest einen, vorzugsweise mehrere Kanäle für den Druckaufbau bzw. Druckausgleich umfasst. Für einen solchen Werkzeughalter mit einem solchen Übergabestück wird ggf. unabhängig von der Auszugssicherung gesondert Schutz begehrt. Das Übergabestück, vorzugsweise in Form eines Rohres, welches sich auch aus mehreren Teilen zusammensetzen kann, ist vorzugsweise mit einem radialen Flansch gebildet und vorzugsweise in einer im Werkzeughalter befindlichen Bohrung beweglich aufgenommen und geführt. Das Rohr, welches zudem auch unterschiedliche Querschnittsprofile aufweisen kann, ist vorzugsweise durch eine Spiralfeder vorgespannt im Werkzeughalter gelagert, wobei der zylindrische Schaft des Rohres vorzugsweise die Spiralfeder durchdringt. Selbstverständlich sind auch andere Kraft ausübende Elemente wie Zugfeder, Kegelfeder, Tellerfeder, und/oder elastische Elemente sowie deren Kombinationen möglich. Die Spiralfeder ist vorzugsweise zwischen dem radialen Flansch des Rohres und bspw. einem Anschlagboden im Werkzeughalter angeordnet, wodurch das Rohr gegenüber dem Werkzeughalter vorgespannt gelagert ist. Das Übergabestück ist vorzugsweise abgedichtet in der Bohrung gelagert. Dabei weist der Werkzeughalter konzentrisch zur Bohrung für das Übergabestück bzw. Rohr bspw. zumindest einen Wellendichtring auf und/oder weitere Dichtungselemente wie Dichtungsringe, Dichtungslippen usw., welche ebenfalls im Werkzeughalter und/oder am Übergabestück bzw. am Rohr selbst angeordnet sein können. Die Kanäle in Form von Durchgangsbohrungen, insbesondere mit kreisförmigen Querschnittsprofil, wobei auch andere Querschnittsprofile möglich sind, sind vorzugsweise im radialen Flansch des Übergabestücks angeordnet, so dass die Durchgangsbohrung im Übergabestück mit der Durchgangsbohrung im radialen Flansch des Übergabestücks verbunden ist. Entlang der zylindrischen Umfangsfläche des radialen Flansches des Übergabestücks ist eine radiale Ausnehmung angeordnet. Darin wird vorzugsweise formschlüssig eine der radialen Ausnehmungen entsprechenden vorzugsweise zylinderflächenabschnittsförmigen Ringmembran eingebettet. Dabei können sowohl die Umfangsflächenausnehmung, insbesondere in Form einer Nut, als auch der vorzugsweise dazu korrespondierende Querschnitt der in der Nut eingebetteten Membran bspw. ein Teilkugelkopfprofil oder andere Profile aufweisen. Die Ringmembran ist vorzugsweise aus einem elastischen Material gebildet, insbesondere aus einem gummielastischem Material, aber auch andere Materialien sind möglich, wie Kohlefasermaterial, Kunststoffe, Teflon und flexible Metalle. Die Kanäle für den Druckausgleich bzw. Druckaufbau sind dabei insbesondere mit der Membran und dem Innenraum des Übergabestücks verbunden. Bei einem Druckaufbau im Werkzeughalter wölbt sich die Membran daher radial auf und legt sich somit an die Umfangsfläche der Aufnahmebohrung des Werkzeughalters an. Dadurch wird das Übergabestück gegen ein axiales Verstellen gesperrt.

Im Folgenden werden Beispiele anhand von Zeichnungen erläutert. Darin zeigt in rein schematischer Darstellung:
- Fig. 1: eine Schnittdarstellung eines Werkzeughalters mit Schrumpffutter mit separatem noch nicht eingespannten und mit Sperrnuten versehenen Schaftfräser,
- Fig. 2: eine Schnittdarstellung eines Werkzeughalters mit Schrumpffutter und eingespannten Schaftfräser.
- Fig. 3: eine Schnittdarstellung eines Werkzeughalters mit Spannzangenfutter und eingespannten Schaftfräser.
- Fig. 4: eine Schnittdarstellung eines Werkzeughalters mit HG-Futter und eingespannten Schaftfräser.
- Fig. 5: eine Schnittdarstellung eines Werkzeughalters mit Hydrodehnspannfutter und eingespannten Schaftfräser.
- Fig. 6: eine Schnittdarstellung eines Werkzeughalters mit eingespanntem Schaftfräser, wobei das Werkzeug ein Außengewinde aufweist und in ein dazu korrespondierendes Innengewinde des Werkzeughalters eingeschraubt ist.
- Fig. 7: eine Schnittdarstellung eines Werkzeughalters mit Kugeln als Sperrelemente, die durch Gewindestifte gesichert sind.
- Fig. 8: eine Schnittdarstellung eines Werkzeughalters mit Kugeln als Sperrelemente, die durch Gewindestifte gesichert sind, wobei die Kugeln teilweise in den Gewindestiften versenkt sind.
- Fig. 9: eine Schnittdarstellung eines Werkzeughalters mit Kugeln als Sperrelemente, gesichert mit Zylinderstiften in Presspassung.
- Fig. 10: eine Schnittdarstellung eines Werkzeughalters mit einteiligem Sperrelement, welches ein Gewindestift mit kugelförmiger Ausprägung an einem seiner Stirnseiten ist.
- Fig. 11: eine Schnittdarstellung eines Werkzeughalters mit einteiligen Sperrelementen, welche Zylinderstifte mit kugelförmiger Ausprägung an einen der Stirnseiten sind, in Presspassung.
- Fig. 12: eine Schnittdarstellung eines Werkzeughalters mit Kugeln in einem separaten Kugelkäfig, daran angrenzend eine Hülse.
- Fig. 13: eine Schnittdarstellung eines Werkzeughalters mit Kugeln, welche in einem in der Hülse eingearbeiteten Kugelkäfig angeordnet sind, wobei die Hülse eingepresst oder eingeschrumpft ist.
- Fig. 14: eine Schnittdarstellung eines Werkzeughalters aus Fig. 13, wobei die Hülse mit dem Werkzeughalter verschweißt ist.
- Fig. 15: eine Schnittdarstellung eines Werkzeughalters aus Fig. 13, wobei die Hülse mit Gewindestiften mit Kegelkuppel mechanisch fixiert ist.
- Fig. 16: eine Schnittdarstellung eines Werkzeughalters mit geschlitzter Hülse, welche die Kugeln aufnimmt, und die Hülse mit Sperrnuten versehen über weitere Kugeln und Gewindestiften am Werkzeughalter gehalten wird.
- Fig. 17: eine Schnittdarstellung eines Werkzeughalters mit einer Kegelfeder für eine spielfreie Auszugssicherung.
- Fig. 18: eine Schnittdarstellung eines Werkzeughalters mit einer Längeneinstellschraube, welche aus gummielastischem Material gebildet ist.
- Fig. 19.: eine Schnittdarstellung eines Werkzeughalters mit einer Längeneinstellschraube, welche darin integriert ein Element aus gummielastischem Material aufweist.
- Fig. 20: eine Schnittdarstellung eines Werkzeughalters mit einer Minimalmengenschmierung, Kugeln als Sperrelementen und einer Membran aus gummielastischem Material.
- Fig. 21: eine Schnittdarstellung und Seitenansicht aus Fig. 20 des Werkzeughalters mit tangentialer Anordnung der Sperrelemente.
- Fig. 22: eine vergrößerte Darstellung eines Bereichs aus Fig. 20 des Werkzeughalters mit der Membran und einem Druckkanal im Ubergabestück.

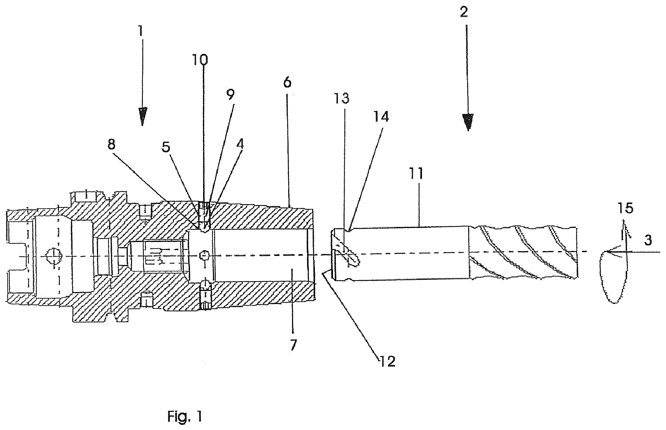

Fig. 1 zeigt schematisch in einer Schnittdarstellung einen Werkzeughalter 1 sowie exemplarisch einen Schaftfräser 2, die zueinander bezüglich einer Drehachse 3 angeordnet sind. Der Werkzeughalter 1 weist dabei mindestens zwei, vorzugsweise drei oder vier Kugeln 4 auf. Die Kugel befindet sich dabei in einer Lagerbohrung 5, welche senkrecht zur Drehachse 3 und damit zur Längsachse, im Hülsenabschnitt 6 des Werkzeughalters 1 angeordnet ist. Diese Lagerbohrung 5 ist eine Durchgangsbohrung und erstreckt sich von der Außenseite des Hülsenabschnitts 6 bis zur Innenumfangsfläche Aufnahmeöffnung 7, welche konzentrisch zur Drehachse 3 im Werkzeughalter 1 angeordnet ist. Die Lagervorderseite 8 der Lagerbohrung 5 ist in Form einer Kugelschalotte und entsprechend der Kugelform der Kugel 4 ausgebildet, so dass die Kugel 4 teilweise in den Innenraum der Aufnahmeöffnung 7 hineinragt. Die Kugel 4 wird durch einen Gewindestift 9 in seiner vorderen Position, also in eine in den Innenraum der Aufnahmeöffnung 7 ragenden Lage gehalten, dabei weist die Lagerbohrung 5 ein zum Außengewinde des Gewindestiftes 9 korrespondierendes Innengewinde auf. Die Länge des Gewindestiftes 9 ragt dabei nicht über die Außenfläche des Hülsenabschnitts 6 hinaus. Der Gewindestift 9 weist dabei einen Innensechskantbuchse 10 auf. Der Schaftfräser 2 weist auf seinem Zylinderschaft 11 in der Nähe der Stirnseite 12 die schraubenförmig angeordneten Sperrnuten 13, 14 auf. Diese haben korrespondierend zur Kugelform der Kugel 4 ein kugelförmiges Profil. Um den Schaftfräser im Werkzeughalter vollständig einzuspannen, muss beim Einführen des Schaftfräsers gemäß Drehrichtung 15 gedreht werden, so dass der Schaftfräser 2 axial schraubenförmig in die Aufnahmeöffnung 7 hineingedreht wird, bis der Schaftfräser 2 einen Anschlag erreicht hat.

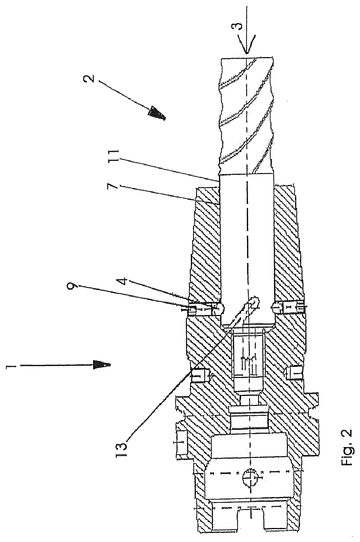

Fig. 2 zeigt rein schematisch in einer Schnittdarstellung den Werkzeughalter 1, in welchem der Schaftfräser 2 vollständig eingespannt ist. Der Schaftfräser 2 befindet sich bis zu seinem Anschlag mit seinem Zylinderschaft 11 in der Aufnahmeöffnung 7. Dabei greift die Kugel 4, gehalten vom Gewindestift 9, in die Sperrnut 13 bzw. 14. In dieser zeichnerischen Schnittdarstellung ist der Zylinderschaft 11 im Presssitz mit der Aufnahmeöffnung 7; d. h. die Induktionsspule (in der Zeichnung nicht gezeigt) ist ausgeschaltet und das Schrumpffutter des Werkzeughalters 1 ist abgekühlt und auf seine ursprüngliche Größe zurückgeschrumpft. Wie in Fig. 2 deutlich zu erkennen ist, kann eine axiale Bewegung des Schaftfräsers 2 entlang der Drehachse 3 nicht durchgeführt werden, da die Kugel 4 in der kugelförmigen Sperrnut 13 bzw. 14 im Zylinderschaft 11 sitzt, so dass eine Bewegung entlang der Drehachse 3 gesperrt ist. Somit wird in dieser Zeichnung das Zusammenwirken zwischen Kugel 4 und Sperrnut 13 bzw. 14 in Form einer Verriegelung deutlich. Zur Entnahme des Schaftfräsers 2 aus dem Werkzeughalter 1 muss lediglich nach Einschalten der Induktionsspule der Schaftfräser 2 entgegen der Drehrichtung 15 (siehe Fig. 1) gedreht und in axialer Richtung entlang der Drehachse 3 aus dem Werkzeughalter 1 hinausgezogen werden.

In den folgenden Figuren sind mögliche Ausführungsformen dargestellt, wie die Auszugssicherung bei weiteren handelsüblichen Spannfuttern ausgebildet ist.

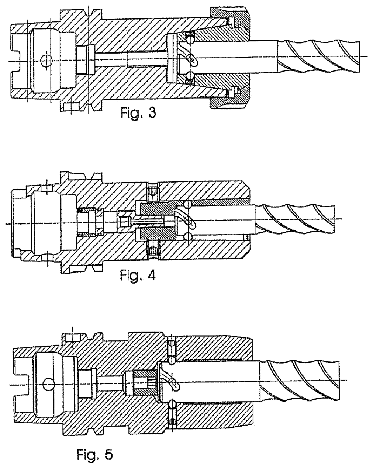

Fig. 3 zeigt in einer schematischen Schnittdarstellung ein gewöhnliches Spannzangenfutter mit Überwurfmutter mit einer Auszugssicherung, welche gegenüber der Erfindung in umgekehrter Anordnung durch die Sperrnute und Kugeln gebildet wird.

Fig. 4 zeigt ein HG-Futter mit einer Auszugssicherung durch Sperrnute und Kugeln.

Fig. 5 zeigt in rein schematischer Schnittdarstellung ein gewöhnliches Hydrodehnspannfutter mit einer Auszugssicherung durch die Sperrnute und Kugeln.

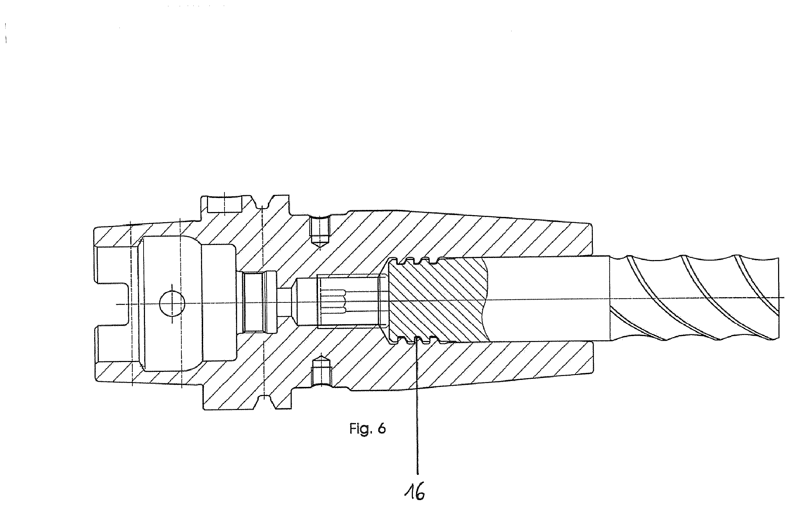

Fig. 6 zeigt in einer rein schematischen Schnittdarstellung einen Werkzeughalter in Form eines Schrumpffutters, wobei der Schaftfräser mit dem Werkzeug über ein Gewinde 16 miteinander verschraubt ist. Aufgrund dieser Verschraubung, welche links steigend bei linksgenutetem Werkzeug und rechts steigend bei rechtsgenutetem Werkzeug ausgebildet ist, wird eine axiale Auszugssicherung des Werkzeugs aus dem Werkzeughalter erreicht.

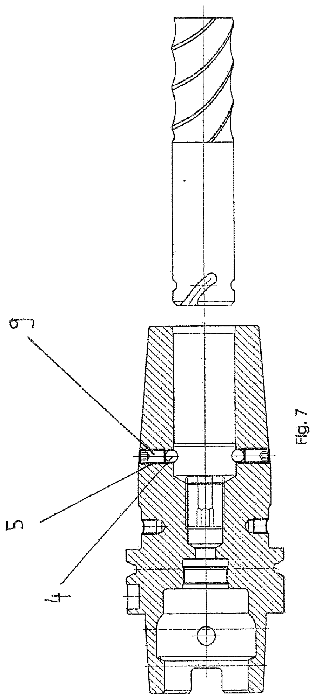

Fig. 7 zeigt in einer rein schematischen Schnittdarstellung ein Schrumpffutter mit Sperrelementen in Form von Kugeln 4, welche in den jeweiligen Lagerbohrungen 5 mit Gewindestiften 9 gehalten werden. Der Gewindestift 9 weist dabei eine stumpfe Stirnseite auf.

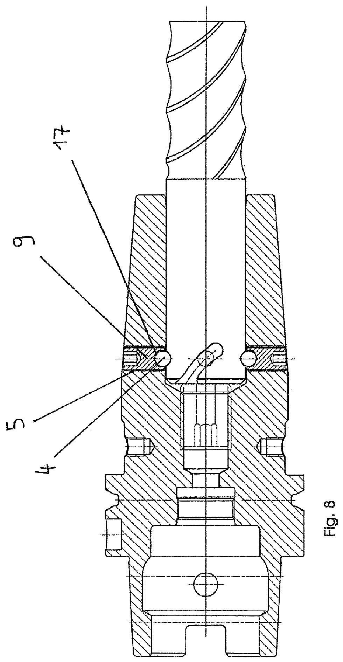

Fig. 8 zeigt in einer rein schematischen Schnittdarstellung ein Schrumpffutter mit Sperrelementen in Form von Kugeln 4, welche in den Lagerbohrungen 5 durch Gewindestifte 9 gehalten werden. Gewindestift 9 weist an der die Kugel 4 aufnehmenden Stirnseite eine Ausnehmung 17 auf. Die Ausnehmung 17 ist in Form einer Sacklochbohrung oder bspw. in Form einer Innensechskantbuchse korrespondierend zum Durchmesser der Kugel gebildet.

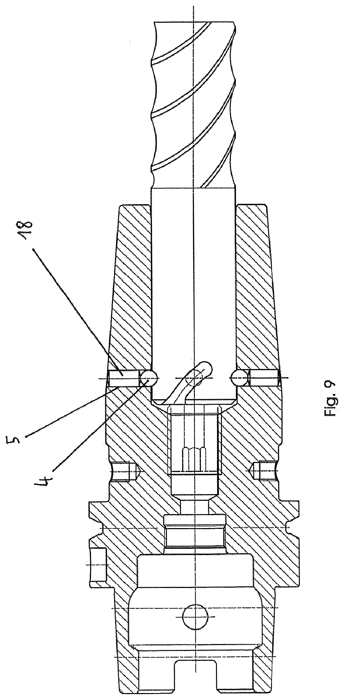

Fig. 9 zeigt in einer rein schematischen Schnittdarstellung ein Schrumpffutter mit Sperrelementen in Form von Kugeln 4, welche in den Lagerbohrungen 5 durch Passstifte 18 gehalten werden. Aufgrund der Presspassung zwischen dem Passstift 18 und der Lagerbohrung 5 sind die Sperrelemente in Form von Kugeln 4 in ihrer Lage fixiert.

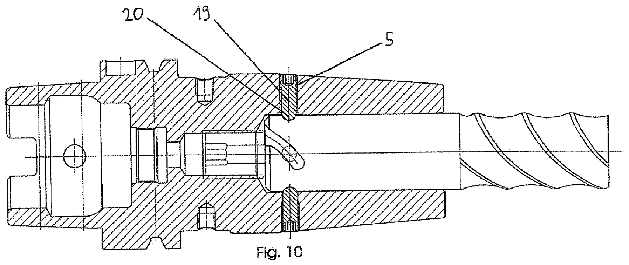

Fig. 10 zeigt in einer rein schematischen Schnittdarstellung ein Schrumpffutter mit einteiligen Sperrelementen 19. Sperrelement 19 ist ein Gewindestift, welcher an einer seiner Stirnseiten einen Halbkugelkopf 20 aufweist.

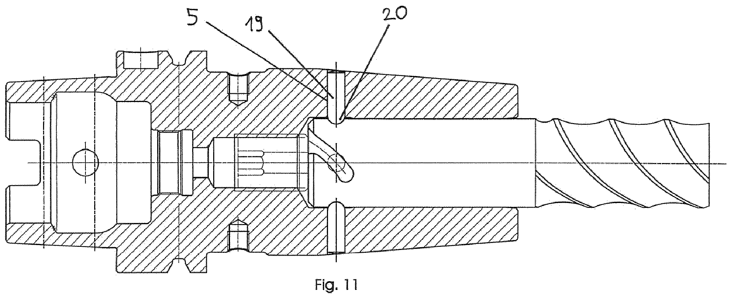

Fig. 11 zeigt in einer rein schematischen Schnittdarstellung ein Schrumpffutter mit einteiligem Sperrelement 19 in den Lagerbohrungen 5. Die einteiligen Sperrelemente 19 sind Passstifte, welche in Presspassung mit dem Schrumpffutter verbunden sind. Die einteiligen Sperrelemente 19 weisen an einer ihrer Stirnseiten einen Halbkugelkopf 20 auf.

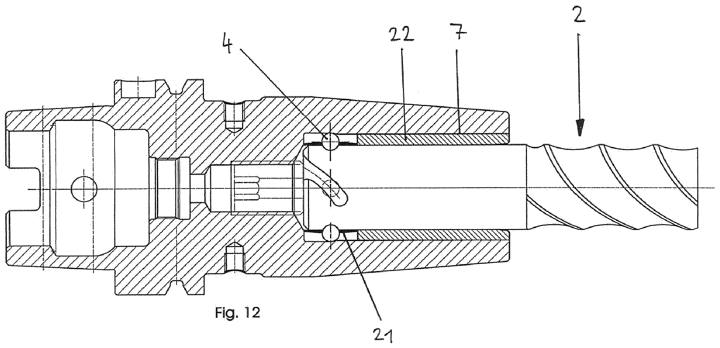

Fig. 12 zeigt in einer rein schematischen Schnittdarstellung ein Schrumpffutter mit Sperrelementen in Form von Kugeln 4. Die Kugeln 4 sind in einem Kugelkäfig 21 gelagert. Dabei ist der Kugelkäfig 21 am Öffnungsgrund der Aufnahmeöffnung 7 angeordnet. Daran angrenzend befindet sich eine Hülse 22. Im Käfig 21 sind die Kugeln 4 eingelassen, die vom Käfig radial nach außen gedrückt werden. Die Kugeln 4 werden dabei an eine Schulter gedrückt, die sich zwischen der Aufnahmeöffnung 7 und einer Freidrehung am Ende der Aufnahmeöffnung 7 befindet. An dieser Schulter können sich die Kugeln 4 axial abstützen. Bei eingeschrumpftem Werkzeug sind die Kugeln 4 auch nach innen abgestützt und können so sowohl das Werkzeug 2 als auch die Hülse 22 gegen einen axialen Auszug sichern.

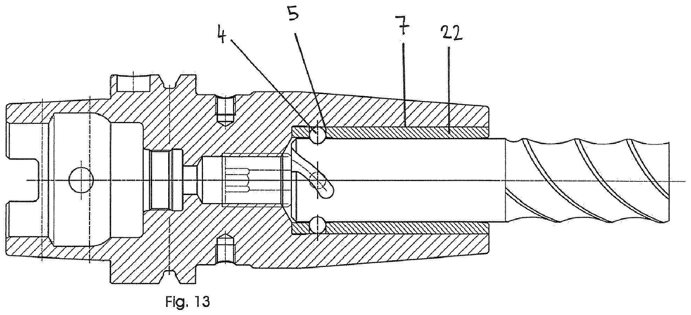

Fig. 13 zeigt in einer rein schematischen Schnittdarstellung ein Schrumpffutter mit den Kugeln 4, welche sich in einer Hülse 22 im linken Abschnitt der Hülse und in der Aufnahmeöffnung 7 befinden. Der linke Abschnitt der Hülse 22 fungiert hierbei als Kugelkäfig für die Kugeln 4. Die Lagerbohrungen 5 für die Kugeln 4 in der Hülse 22 weisen bzgl. der innen liegenden Zylinderumfangsfläche der Hülse 22 einen kleineren Durchmesser auf, als der Durchmesser der Kugeln bzw. der Lagerbohrungsdurchmesser. Somit können die Kugeln 4 in den Innenraum hineinragen, jedoch nicht hineinfallen. Die Hülse 22 ist in das Futter entweder eingeschrumpft oder eingepresst.

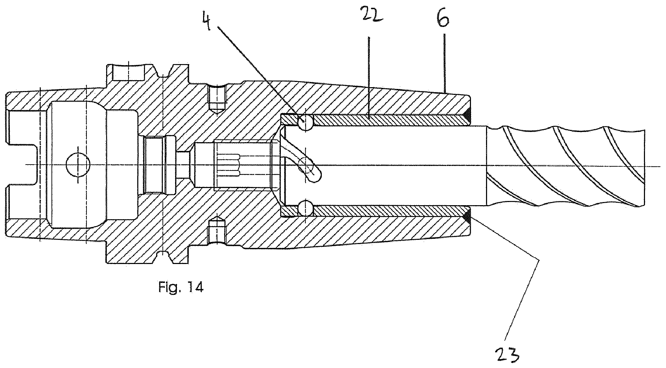

Fig. 14 zeigt in einer reinschematischen Schnittdarstellung ein Schrumpffutter mit Kugeln 4 in einer Hülse 22. Die Hülse 22 ist mit dem Hülsenabschnitt 6 mit einer Schweißnaht 23 verbunden. Die Verschweißung der Hülse 22 mit dem Schrumpffutter kann dabei punktuell, abschnittweise oder ringförmig als geschlossene bspw. Y-Naht ausgebildet sein.

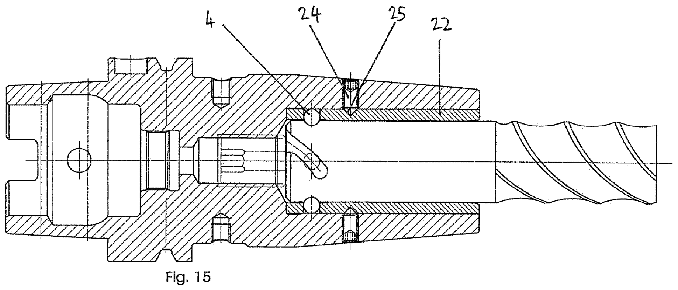

Fig. 15 zeigt in einer rein schematischen Schnittdarstellung ein Schrumpffutter mit Kugeln 4 in einer Hülse 22. In dieser Ausführungsform wird die Hülse 22 über Gewindestifte 24 mit dem Werkzeughalter fixiert. Dabei weisen die Gewindestifte 24 bspw. eine Kegelkuppe auf. Selbstverständlich sind auch andere Ausbildungen, wie bspw. ein Kugelkopf usw. möglich. Zu der stirnseitigen Ausbildung der Gewindestifte 24 weist die Hülse 22 korrespondierende Vertiefungen 25 auf, welche korrespondieren zur stirnseitigen Kuppenbildung der Gewindestifte 24 gebildet sind. In der vorliegenden Ausführungsform sind diese Vertiefungen 25 kegelförmig gebildet. Zur Fixierung der Hülse 22 am Werkzeughalter ist zumindest ein Gewindestift 24 mit einer stirnseitigen Ausbildung, bspw. in Form eines Kegels notwendig. Vorzugsweise sind drei, besonders bevorzugt vier Gewindestifte zum Fixieren der Hülse 22 am Werkzeughalter angeordnet.

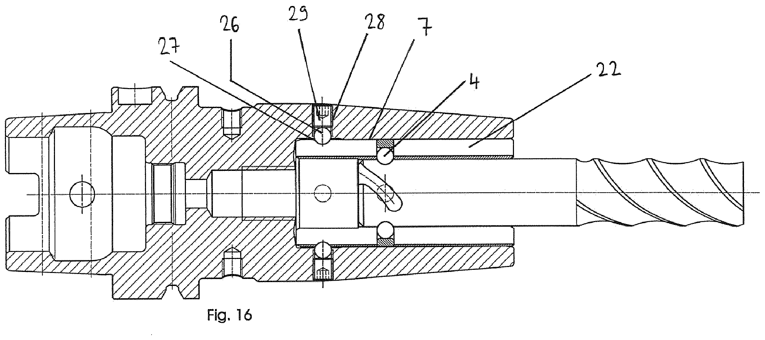

Fig. 16 zeigt in einer rein schematischen Schnittdarstellung ein Schrumpffutter mit den in der Hülse 22 angeordneten Sperrelementen in Form von Kugeln 4. Die Hülse 22 ist dabei dickwandiger ausgebildet, als in den vorhergehenden Figuren. Daher ist die Hülse 22 geschlitzt (in der Zeichnung nicht dargestellt). In dieser Ausführungsform wird die Hülse 22 ebenfalls durch Kugeln mit dem Werkzeughalter verbunden. Dabei befinden sich im linken Bereich der Hülse 22 zu den Kugeln korrespondierende Sperrnute 27, welche ebenfalls ein Kugelprofil aufweisen. So wie das Werkzeug im Schrumpffutter durch das Zusammenspiel von Sperrelementen und Sperrnuten axial fixiert wird, wird in diesem Fall die Hülse 22 über Kugeln 26 als Sperrelemente mit Sperrnuten 27 in der äußeren Umfangsfläche der Hülse 22 axial fixiert. Die Kugeln 26 befinden sich dabei in Lagerbohrungen 28, welche wiederum Gewindestifte 29 mit einem Gewinde miteinander verbindet. Auch in diesem Fall weist die Lagerbohrung 28 in dem innen liegenden Bereich in Richtung zur Aufnahmeöffnung 7 einen kleineren Durchmesser auf, als der Lagerdurchmesser, welcher dem Kugeldurchmesser der Kugel 26 entspricht. Somit kann die Kugel 26 nicht in den Innenraum hineinfallen, sondern sie ragen hinein.

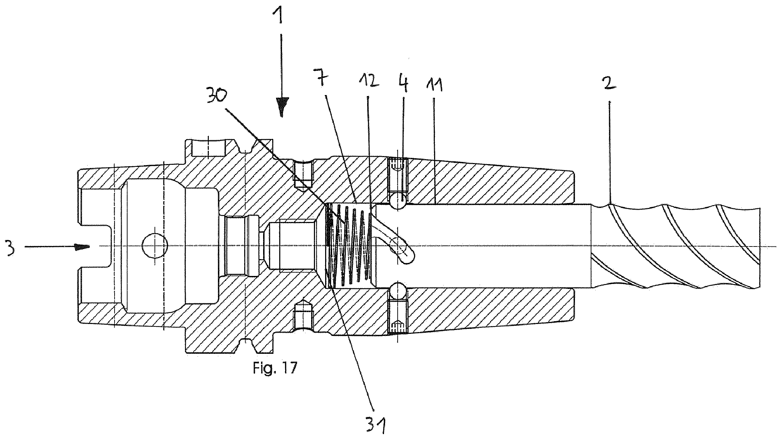

Fig. 17 zeigt in einer rein schematischen Schnittdarstellung ein Schrumpffutter mit einer axialen Auszugssicherung gemäß Fig. 2. Zusätzlich weist der Werkzeughalter eine Kegelfeder 30 auf, welche sich zwischen der Stirnseite 12 des Zylinderschafts 11 des Schaftfräsers 2 und dem Boden 31 der Aufnahmeöffnung 7 befindet. Die Druckfeder in Form einer Kegelfeder 30 drückt dabei auf die Stirnfläche 12 des Schaftfräsers 2 in Richtung der Drehachse 3 aus dem Werkzeughalter 1 hinaus. somit wird ein mögliches Spiel bzw. Fertigungstoleranzen der Sperrnute in der Umfangsfläche des Zylinderschafts 11 und der jeweiligen Lage der Kugeln 4 im Werkzeughalter 1 eliminiert, insofern, dass der Schaftfräser 2 in axialer Richtung durch die Kraft der Kegelfeder 3 zusätzlich gesperrt ist. Somit kann auch ein geringes Spiel zwischen der axialen Auszugssicherung und dem Werkzeug eliminiert werden. Somit läuft man nicht Gefahr, aufgrund von kleinen Fertigungstoleranzen zusätzlich die Werkzeugschneiden während des Betriebs zu schädigen.

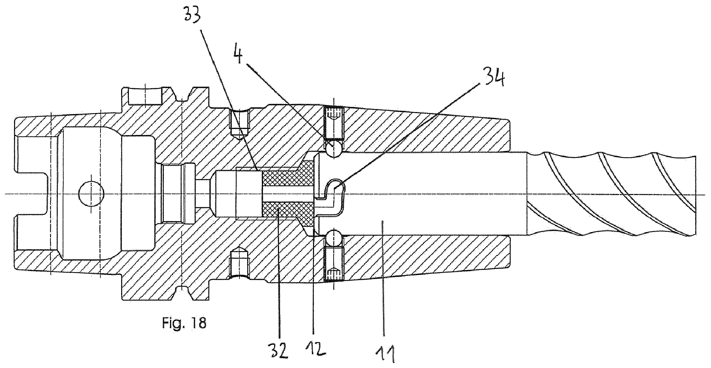

Fig. 18 zeigt in einer rein schematischen Schnittdarstellung ein Schrumpffutter mit den Sperrelementen in Form von Kugeln 4. Hier erfolgt die spielfreie Auszugssicherung des Werkzeugs nach dem Einschrumpfen durch Verwendung einer Längeneinstellschraube 32, welche vorzugsweise aus einem gummielastischen Material gebildet ist. Zu der Längeneinstellschraube 32 ist im Werkzeughalter korrespondierend ein Innengewinde 33 gebildet. In Fig. 18 ist zusätzlich eine weitere Ausführungsmöglichkeit für den Sperrnutverlauf gezeigt. In dieser Ausführungsform ist die Sperrnut 34 in Form eines "L"'s, beginnend aber der Stirnseite 12 des Zylinderschafts 11, gebildet. Damit ist quasi ein bajonettartiger Sperrverschluss für eine axiale Sperrung als Auszugssicherung des Werkzeugs aus dem Werkzeughalter geschaffen.

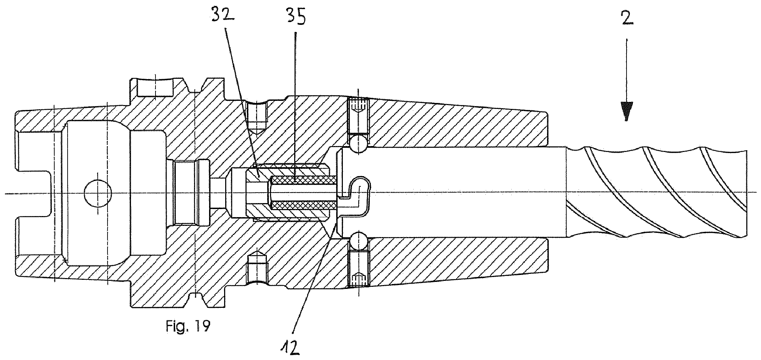

Fig. 19 zeigt in einer rein schematischen Schnittdarstellung ein Schrumpffutter aus Fig. 18, wobei konzentrisch zur Längeneinstellschraube 32 ein darin integriertes elastisches Element 35 angeordnet ist. In diesem Fall ist das elastische Element 35 vorzugsweise aus einem gummielastischen Material gebildet. Die spielfreie Auszugssicherung erfolgt über die Anpresskraft, welche über die Längeneinstellschraube 32 auf das elastische Element 35 über die Stirnseite 12 auf den Schaftfräser 2 ausgeübt wird.

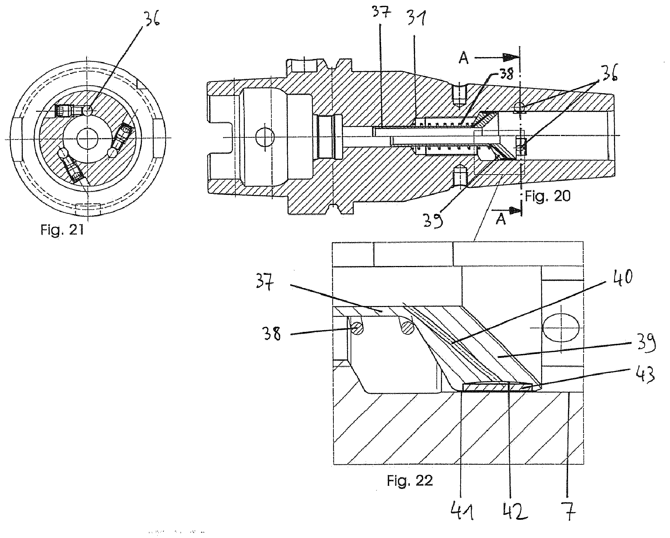

Fig. 20 zeigt in einer rein schematischen Schnittdarstellung ein Schrumpffutter, mit einer Minimalmengenschmierung (MMS). Die axiale Auszugssperre erfolgt über Sperrelemente 36, welche wiederum in Form von Kugeln gebildet sind. Konzentrisch zur Rotationsachse im Inneren des Schrumpffutters, befindet sich ein verschiebbares Rohr 37, welches das Übergabestück für die Minimalmengenschmierung ist. Das Rohr 37 wird aufgrund der Federkraft einer Spiralfeder 38 an den Werkzeugschaft (in der Zeichnung nicht dargestellt) angedrückt. In der Fig. 20 sind zwei mögliche Endlagen des Rohres 37 gezeigt. Die rechts liegende Kontaktfläche des Rohres mit dem Werkzeugschaft ist kegelförmig in Form eines radialen Rohrflansches 39 ausgebildet. Die Spiralfeder 38 wird dabei durch das Rohr 37 konzentrisch durchdrungen. Die Spiralfeder 38 befindet sich zwischen dem Boden 31 und der kegelabschnittsförmigen Umfangsfläche des Rohres 37 am radialen Halsflansch. Fig. 21 zeigt entlang der Schnittlinie A-A aus Fig. 20 in einer rein schematischen Schnittdarstellung die tangentiale Anordnung der Sperrelemente 36 im Werkzeughalter. Fig. 22 zeigt eine Ausschnittsvergrößerung eines Ausschnitts aus Fig. 20, welches mit einer Strichlinie markiert ist. Im radialen Halsflansch 39 des Rohres 37 sind Durchgangsbohrungen 40 angeordnet, welche sich vom Innendurchmesser des Rohres 37 bis zur äußeren Umfangsfläche 41 des radialen Rohrflansches 39 erstrecken. Entlang der zylindrischen Umfangsfläche 41 des radialen Rohrflansches 39 des Rohres 37 ist eine konzentrische zylinderflächenförmige Ausnehmung 42 angeordnet, deren Breite vorzugsweise kleiner als die Breite der Zylinderumfangsfläche 41 des Rohrflansches 39 ist. Korrespondierend zur Ausnehmung 42 ist eine ringförmige zylinderflächenabschnittsförmige Membran 43 angeordnet, welche bündig zur äußeren Zylinderumfangsfläche 41 des Rohrflansches 39 gebildet ist. Die Membran 43 ist dabei vorzugsweise aus einem gummielastischen Material gebildet. Diese Membran 43 entlang der Umfangsfläche 41 dichtet das Rohr 37 gegen die Wand der Aufnahmeöffnung 7 des Schrumpffutters ab. Die Bohrungen 40, welche radial an die Innenseite der Membran 43 führen, leiten den Luftdruck an die Membran 43 weiter, welche somit an die Bohrungswand 7 angedrückt wird. Durch den Druckaufbau wölbt sich die Membran radial auf und legt sich so an die innere Umfangsfläche der Aufnahmeöffnung 7 des Werkzeughalters an. Somit wird das Rohr 37 als Übergabestück für die Minimalmengenschmierung gegen ein axiales Verstellen gesichert. Durch das verschiebbare Rohr 37 kann der Schmiernebel verlustfrei an das Werkzeug geleitet werden.

Bei einem Werkzeughalter mit einer Werkzeugaufnahme, vorzugsweise ein Spannfutter, und darin aufgenommenen Schaft eines Werkzeugs, insbesondere Rotationswerkzeugs, ist vorgesehen, dass der Werkzeughalter eine ein axiales Auswandern des Werkzeugs sperrende Auszugssicherung aufweist. Bei dem Werkzeughalter ist vorgesehen, dass die Auszugssicherungseinrichtung mindestens ein Sperrelement und mindestens eine dazu korrespondierende und das Sperrelement aufnehmende Sperrnut umfasst, welche formschlüssig zusammenwirken.

Bei dem Werkzeughalter kann vorgesehen sein, dass das Sperrelement und die Sperrnut zumindest teilkugelkopfartig ausgebildet sind. Bei dem Werkzeughalter kann vorgesehen sein, dass das Spannfutter insbesondere ein Spannzangenfutter, ein HG-Futter, ein Hydrodehnspannfutter oder ein Schrumpffutter ist.

Es kann vorgesehen sein, dass der Sperrnutverlauf schraubenförmig, L-förmig, kurvenförmig oder aus zusammengesetzten abschnittweise geradlinigen und/oder kurvenförmigen Zylinderflächenbahnen ausgebildet ist. Insbesondere kann vorgesehen sein, dass der schraubenförmige Sperrnutverlauf bei linksgenutetem Werkzeug linkssteigend und bei rechtsgenutetem Werkzeug rechtssteigend gebildet ist.

Bei einem Werkzeughalter kann vorgesehen sein, dass der Schaft des Werkzeugs endseitig ein Außengewinde aufweist, wobei bei linksgenutetem Werkzeug das Außengewinde linkssteigend und bei rechtsgenutetem Werkzeug das Außengewinde rechtssteigend gebildet ist, und der Werkzeughalter ein dazu korrespondierendes Innengewinde aufweist.

Allgemein kann bei Werkzeughaltern vorgesehen sein, dass die Sperrelemente in Lagerbohrungen im Werkzeughalter gelagert werden, wobei sich die Lagerbohrungen vorzugsweise durchgängig von der Außenumfangsfläche bis in den das Werkzeug aufnehmende Innenraum des Werkzeughalters erstrecken, und diese entweder senkrecht zur Rotationsachse des Werkzeughalters gebildet sind und/oder tangential angrenzend an die innere Umfangsfläche des das Werkzeug aufnehmenden Innenraums. Bei dem Werkzeughalter kann vorgesehen sein, dass die Sperrelemente in den Lagerbohrungen vorzugsweise durch Gewindestifte und/oder durch Presspassung gehalten werden, und/oder die Sperrelemente mit Außengewinde ausgebildet sind, welche korrespondierend zu in den Lagerbohrungen gebildeten Innengewinden ausgebildet sind. Bei dem Werkzeughalter kann vorgesehen sein, dass die Sperrelemente in ihrer gelagerten Position in den Lagerbohrungen mit der kugelkopfartigen Ausbildung in den Innenraum des das Werkzeug aufnehmenden Werkzeughalters zumindest teilweise hineinragen. Bei dem Werkzeughalter kann vorgesehen sein, dass die Sperrelemente, insbesondere Kugeln in Werkzeughaltern, insbesondere Schrumpffutter, in zumindest einem Kugelkäfig gelagert werden, wobei die Lagerbohrungen für die Kugeln des Kugelkäfigs bezüglich der Innenseite einen kleineren Durchmesser aufweisen, als der Lagerbohrungsdurchmesser.

Allgemein kann bei Werkzeughaltern vorgesehen sein, dass der Werkzeughalter zumindest einen Kugelkäfig im Innenraum des Werkzeughalters aufweist, wobei der Kugelkäfig als separates Bauteil, in einer Hülse eingearbeitet oder eine ein Kugelkäfig aufweisende Hülse ist, wobei die Hülse eingepresst, eingeschrumpft, mit der Werkzeughalter verschweißt, mit Gewindestiften formschlüssig gehalten und/oder mit Sperrelementen und Sperrnuten an der Hülse, fixiert wird.

Bei dem Werkzeughalter ist vorgesehen, dass das Werkzeug mit der Auszugsicherung, insbesondere bei Schrumpffuttern, axial spielfrei durch kraftausübende Elemente gehalten wird, insbesondere mit zumindest einer Druckfeder, Kegelfeder, Schraubenfeder, Tellerfeder sowie Federpakete, und/oder gummielastische Elemente.

Bei dem Werkzeughalter kann vorgesehen sein, dass das Werkzeug mit der Auszugsicherung, insbesondere bei Futtern mit Minimalmengenschmierung, axial spielfrei gehalten wird, wobei das Übergabestück für die Minimalschmierung zumindest eine Durchgangsbohrung im kegelförmigen radialen Flanschbereich aufweist, der radiale Flansch des Übergabestücks entlang seiner zylindrischen Umfangsfläche eine radiale Ausnehmung aufweist, worin dazu korrespondierend eine zylinderflächenabschnittförmige Ringmembran vorzugsweiseformschlüssig und bündig eingebettet anliegt, vorzugsweise aus gummielastischen Material gebildet, wobei sich die Durchgangsbohrungen radial vom Innenraum des Übergabestücks an die Membran erstrecken.

## Patentansprüche

1. Werkzeughalter (1) mit einer mit einem Hülsenabschnitt (6) mit einer Aufnahmeöffnung (7) für ein Werkzeug (2) versehenen Werkzeugaufnahme mit einem Spannfutter
und mit einer Auszugssicherung für das Werkzeug,
wobei der Werkzeughalter bei drehmomentfester Einspannung des Werkzeugs (2) axiale Werkzeugbewegungen des Werkzeugs relativ zur Werkzeugaufnahme sperrt,
**dadurch gekennzeichnet, dass** die Auszugssicherung eine, vorzugsweise mehrere zueinander gleichwinklig angeordnete Sperrnuten,
durch die ein auf einer Zylinderfläche eines Werkzeugschafts vorgesehenes Sperrelement formschlüssig in dem Spannfutter der Werkzeugaufnahme aufnehmbar ist, aufweist
und die mindestens eine Sperrnut, beginnend von der einem Werkzeug (2) zugewandten Stirnseite der Werkzeugaufnahme her, einen unterschiedlichen Sperrnutverlauf aufweist,
und dass die Auszugssicherung eine Einrichtung beinhaltet, die derart ausgebildet ist, dass ein eingespanntes Werkzeug (2) durch mindestens ein kraftausübendes Element (30; 32, 33) spielfrei innerhalb der Werkzeugaufnahme gehalten wird,
wobei das mindestens eine kraftausübende Element an der Stirnfläche (12) eines eingespannten Werkzeugschafts (11) zur Anlage gelangt.

2. Werkzeughalter nach Anspruch 1, **dadurch gekennzeichnet, dass** zwei bis vier, vorzugsweise drei Sperrnuten in der Werkzeugaufnahme vorgesehen sind.

3. Werkzeughalter nach Anspruch 1 oder 2, **dadurch gekennzeichnet, dass** der Sperrnutverlauf L-förmig ausgebildet ist.

4. Werkzeughalter nach einem der vorhergehenden Ansprüche, **dadurch gekennzeichnet, dass** das mindestens eine kraftausübende Element der Auszugssicherung durch eine Druckfeder, insbesondere Spiralfeder, Kegelfeder, Tellerfeder oder durch ein Tellerfederpaket und/oder elastische, insbesondere gummielastische Elemente oder Kombinationen hiervon gebildet ist.

5. Werkzeughalter nach Anspruch 4, **dadurch gekennzeichnet, dass** die kraftausübenden Elemente zwischen dem stirnseitigen Schaftende eines eingespannten Werkzeugs (2) und einem Anschlagboden (31) des Werkzeughalters (1) gelagert sind.

6. Werkzeugspannsystem
mit einem Werkzeughalter (1) nach einem der vorhergehenden Ansprüche und mit einem Rotationswerkzeug (2),
welches einen zylindrischen Werkzeugschaft (11) aufweist,
mit dem das Werkzeug in die Aufnahmeöffnung (7) eingesetzt und drehmomentfest in das Spannfutter der Werkzeugaufnahme eingespannt ist,
wobei das Rotationswerkzeug (2) als Fräser ausgebildet ist,
und die Auszugssicherung mindestens ein Sperrelement auf der Zylinderfläche des Werkzeugschafts (11) und mindestens eine damit korrespondierende Sperrnut, vorzugsweise mehrere zueinander gleichwinklig angeordnete Sperrnuten, die das Sperrelement formschlüssig in dem Spannfutter der Werkzeugaufnahme aufnimmt, aufweist
und dass durch die Auszugssicherung das eingespannte Werkzeug (2) durch das mindestens eine kraftausübende Element (30; 32, 33) spielfrei innerhalb der Werkzeugaufnahme gehalten ist,
wobei das mindestens eine kraftausübende Element an der Stirnfläche (12) des eingespannten Werkzeugschafts (11) zur Anlage gelangt.

7. System nach Anspruch 6, **dadurch gekennzeichnet, dass** das Sperrelement als Passstift, Bolzen oder zylinderförmiger Stift ausgebildet ist.

## Claims

1. Tool holder (1) having a tool receptacle, provided with a sleeve portion (6) with a receiving opening (7) for a tool (2), having a chuck and having a pull-out prevention means for the tool, wherein, when the tool (2) is clamped in place fixedly in terms of torque, the tool holder prevents axial tool movements of the tool relative to the tool receptacle, **characterized in that** the pull-out prevention means has a blocking groove, preferably a plurality of blocking grooves that are arranged in an equiangular manner with respect to one another, by way of which a blocking element provided on the cylinder surface of the tool shank is able to be received in a form-fitting manner in the chuck of the tool receptacle, and the at least one blocking groove, starting from the end side, facing a tool (2), of the tool receptacle, has a different blocking groove profile, and **in that** the pull-out prevention means contains a device that is configured in such a way that a tool (2) that is clamped in place is held within the tool receptacle in a play-free manner by at least one force-exerting element (30; 32, 33), wherein the at least one force-exerting element comes to bear on the end face (12) of a tool shank (11) that is clamped in place.

2. Tool holder according to Claim 1, **characterized in that** two to four, preferably three blocking grooves are provided in the tool receptacle.

3. Tool holder according to Claim 1 or 2, **characterized in that** the blocking-groove profile is formed in an L-shaped manner.

4. Tool holder according to one of the preceding claims, **characterized in that** the at least one force-exerting element of the pull-out prevention means is formed by a compression or tension spring, in particular a spiral spring, conical spring, disc spring, coil spring or by a disc spring assembly and/or elastic, in particular rubber-elastic elements or combinations thereof.

5. Tool holder according to Claim 4, **characterized in that** the force-exerting elements are mounted between the end-side shank end of a tool (2) that is clamped in place and a stop base (31) of the tool holder (1).

6. Tool clamping system which is equipped for highperformance machining of workpieces, having a tool holder (1) according to one of the preceding claims and having a rotary tool (2) which has a cylindrical tool shank (11) with which the tool is inserted into the receiving opening (7) and is clamped in place fixedly in terms of torque in the chuck of the tool receptacle, wherein the rotary tool (2) is in the form of a milling cutter and the pull-out prevention means has at least one blocking element on the cylinder surface of the tool shank (11) and at least one corresponding blocking groove, preferably a plurality of blocking grooves that are arranged in an equiangular manner with respect to one another, which receives the blocking element in a form-fitting manner in the chuck of the tool receptacle, and in that, by way of the pull-out prevention means, the tool (2) that is clamped in place is held within the tool receptacle in a play-free manner by the at least one force-exerting element (30; 32, 33), wherein the at least one force-exerting element comes to bear on the end face (12) of the tool shank (11) that is clamped in place.

7. System according to Claim 6, **characterized in that** the blocking element is in the form of a register pin, bolt or cylindrical pin.

## Revendications

1. Porte-outil (1) comprenant un logement d'outil, pourvu d'une portion formant manchon (6) pourvue d'une ouverture de réception (7) destinée à un outil (2), et pourvu d'un mandrin et d'une sécurité anti-extraction destinée à l'outil, le porte-outil bloquant des mouvements d'outil axiaux de l'outil par rapport au logement d'outil lorsque l'outil (2) est serré solidairement en termes de couple, **caractérisé en ce que** la sécurité anti-extraction comporte une rainure de blocage, de préférence plusieurs rainures de blocage, qui sont disposées suivant le même angle les unes par rapport aux autres, rainure de blocage à travers laquelle un élément de blocage prévu sur la surface cylindrique de la tige d'outil peut être reçu par complémentarité de formes dans le mandrin du logement d'outil, et l'au moins une rainure de blocage, à partir du côté frontal du logement d'outil qui est dirigé vers un outil (2), a une allure différente, et **en ce que** la sécurité anti-extraction contient un moyen qui est conçu de telle sorte qu'un outil serré (2) soit maintenu sans jeu dans le logement d'outil par au moins un élément (30 ; 32, 33) exerçant une force, l'au moins un élément exerçant une force venant en appui sur la surface frontale (12) d'une tige d'outil serrée (11).

2. Porte-outil selon la revendication 1, **caractérisé en ce que** deux à quatre, de préférence trois, rainures de blocage sont prévues dans le logement d'outil.

3. Porte-outil selon la revendication 1 ou 2, **caractérisé en ce que** l'allure de la rainure de blocage a une forme de L.

4. Porte-outil selon l'une des revendications précédentes, **caractérisé en ce que** l'au moins un élément, exerçant une force, de la sécurité anti-extraction est formé par un ressort de compression ou de traction, en particulier un ressort en spirale, un ressort conique, un ressort à disque, un ressort hélicoïdal ou un ensemble de ressorts à disque et/ou des éléments élastiques, en particulier caoutchouteux ou des combinaisons de ceux-ci.

5. Porte-outil selon la revendication 4, **caractérisé en ce que** les éléments exerçant une force sont montés entre l'extrémité de tige côté frontal d'un outil serré (2) et un fond de butée (31) du porte-outil (1).

6. Système de serrage d'outil qui est prêt à l'usinage à haute performance de pièces, ledit système comprenant un porte-outil (1) selon l'une des revendications précédentes et un outil rotatif (2) qui comporte une tige d'outil cylindrique (11) avec laquelle l'outil est inséré dans l'ouverture de réception (7) et est serré dans le mandrin du logement d'outil solidairement en termes de couple, l'outil rotatif (2) étant conçu comme une fraise, et la sécurité anti-extraction comportant au moins un élément de blocage sur la surface cylindrique de la tige d'outil (11) et au moins une rainure de blocage correspondante, de préférence plusieurs rainures de blocage disposées suivant le même angle les unes par rapport aux autres, laquelle rainure de blocage reçoit l'élément de blocage par complémentarité de formes dans le mandrin du logement d'outil, et en ce que l'outil serré (2) est maintenu sans jeu dans le logement d'outil par l'au moins un élément (30 ; 32, 33) exerçant une force du fait de la sécurité anti-extraction, l'au moins un élément exerçant une force venant en appui sur la face frontale (12) de la tige d'outil serrée (11).

7. Système selon la revendication 6, **caractérisé en ce que** l'élément de blocage est réalisé sous la forme d'une goupille, d'un boulon ou d'une tige cylindrique.
